# EUROPEAN PATENT APPLICATION

(11) **EP 1 601 068 A1**
(43) Date of publication of application: **30.11.2005**
(21) Application number: 04253075.8
(22) Date of filing: 25.05.2004
(51) Int. Cl.: H01S 3/098, H01S 3/091

(54) **Laser device using two laser media**

(71) Applicant: National Institute of Information and Communications Technology Incorporated Administrative Agency, Koganei-shi, Tokyo (JP)
(72) Inventor: Ishizu, Mitsuo, Koganei-shi Tokyo (JP)
(74) Representative: Smith, Norman Ian

(57) **Abstract**

A laser device using two laser media (2,3) includes an excitation light source (1), a first laser oscillator (10) having a first solid-state medium (2) excited by the excitation light source (1), a second solid-state laser medium (3) disposed in the first laser oscillator (10) and excited by light from the first solid-state laser medium (2) and an output device (6) for emitting light amplified by the second solid-state laser medium (3).

## Description

This invention relates to a laser device using two laser media, namely two sets of laser media which can be utilized as oscillators or amplifiers for a continuous wave or a pulsed wave.

When the radiation spectrum of the semiconductor laser diode (LD) or the lamp serving as an pumping light source in a laser oscillator does not concur with the absorption spectrum of lasing elements dispersed in a solid-state laser medium, the pumping light source may fall to excite the laser medium. In the case of this failure, it has been hitherto customary to resort to the co-doping which consists in doping a laser rod with a first lasing element capable of being excited by the lamp or the LD in conjunction with a second lasing element being subjected to excitation. In the laser medium which has undergone the co-doping, the first lasing element excited by the energy of the pumping light returns to the ground state and the second lasing element is then excited by receiving this energy from the first lasing element.

Generally, in manufacturing a laser medium via such a co-doping to achieve both a high absorption of pumping light and a high oscillation efficiency, it is difficult to optimize the doping levels of the first lasing element and the second lasing element in a laser rod. To be specific, this difficulty consists in converting the light energy from the pumping light source with high efficiency into a laser light energy. Since the pumping light energy is accumulated in a rod and is consequently made to increase the temperature of the laser rod and heighten the temperature of the second laser element as well, the heat generated in the rod must be removed to maintain its optimum operating temperature. In the case of the laser device using one laser medium, it is generally difficult to effect this cooling as reported in T. Y. Fan, G. Hubber, and R. L. Byer, "Continuous-wave operation at 2.1 mm of a diode laser-pumped, Tm-sensitized Ho: Y₃Al₅O₁₂ laser at 300 K," Optics Letters, Vol. 12, No. 9, pp 678-680 (1987). The Q-switched lasers at eye-safe wavelengths utilize rare-earth ions as the lasing elements and some of which has the terminal energy levels very near to the ground level in the laser transition. Because the population of this level is not readily decreased in an environment at high temperature, these lasers suffer the laser transition to be obstructed and encounters difficulty in realizing a high conversion efficiency and a large laser pulse energy at the same time.

The conventional laser device which uses two laser media has a structure such that a second laser oscillator formed of a second laser rod doped with a second laser element and a pair of mirrors serving as a resonator is inserted into a first laser oscillator formed of a laser medium (first laser rod) doped with a first laser element and a pair of mirrors serving as a resonator. The first laser rod is optically pumped by means of an LD and made to effect laser oscillation and part of the oscillating light emanates from the output mirror. The oscillating light in the resonator induces optical excitation during passing the second laser rod and then results in producing oscillation by means of the second laser rod and the resonator of the second laser oscillator. This output is fetched from the output mirror of the second laser oscillator, passed through the mirror of the resonator of the first laser oscillator disposed on the outer side thereof, and taken out.

In the structure described above, since the resonator of the second laser oscillator must pass the laser light of the first laser oscillator without loss, the second laser oscillator is not easily made to effect pulsed oscillation by the insertion therein of such an oscillation-controlling element such as a Q-switch capable of controlling the oscillation thereof.

When the radiation spectrum of the semiconductor laser or the lamp serving as an pumping light source in a laser oscillator does not concur with the absorption spectrum of a solid-state laser element dispersed in a laser medium as described above, the laser device provided with the laser rod which has undergone the conventional co-doping incurs obstruction of the laser transition and encounters difficulty in realizing a high conversion efficiency and a large laser pulse energy simultaneously because the population of the terminal energy level does not easily decrease in an environment of high temperature. The laser device comprising a solid-state laser oscillator furnished with a pair of mirrors serving as a resonator in which disposed is an another solid-state laser oscillator furnished with a pair of mirrors but serving as another resonator encounters difficulty in inducing either of the oscillators to effect pulsed oscillation by the insertion therein of an oscillation-controlling element such as a Q-switch capable of controlling the oscillation thereof.

This invention has initiated in the light of the true state of affairs mentioned above and has for an object thereof the provision of a laser device using two laser media which possess a high conversion efficiency and permit pulsed oscillation even when the semiconductor laser diode or the lamp serving as an pumping light source does not easily effect direct excitation.

A laser device using two laser media, comprising an excitation light source, a first laser oscillator having a first solid-state laser medium excited by the excitation light source, a second solid-state laser medium disposed in the first laser oscillator and excited by the light amplified by the first solid-state laser medium and an output means for emitting light amplified by the second solid-state laser medium.

The laser device further comprises a second laser oscillator in which the second solid-state laser medium is disposed and a configuration for fetching light output from the second laser oscillator.

In the second mentioned laser device, the first laser oscillator and second laser oscillator have a reflecting mirror used in common with each other.

In the third mentioned laser device, the reflecting mirror of said second laser oscillator is enabled to emit an output by transmitting part of the light amplified by the first solid-state laser medium.

In the second mentioned laser device, the second laser oscillator has a light path and further comprising an oscillation-controlling element disposed on the light path.

In the fifth mentioned laser device, the oscillation-controlling element is a Q-switch.

In the fifth mentioned laser device, the oscillation-controlling element is a mode-locking element.

In the fifth mentioned laser device, the oscillation-controlling element is a nonlinear crystal for harmonics generation.

In the first mentioned laser device, the first laser oscillator is in a state of an oscillator and the second laser medium is in a state of an amplifier.

In the first mentioned laser device, the first laser oscillator has a light path and further comprising an oscillation-controlling element disposed on the light path.

In the second mentioned laser device, the first laser oscillator has a light path and further comprising an oscillation-controlling element disposed on the light path.

In the tenth mentioned laser device, the oscillation-controlling element is a Q-switch and the second solid-state laser medium effects amplification of a pulse light.

In the eleventh mentioned laser device, the oscillation-controlling element is a Q-switch and the second solid-state laser medium effects amplification of a pulse light.

In the tenth mentioned laser device, the oscillation-controlling element is a nonlinear crystal for harmonics generation.

In the eleventh mentioned laser device, the oscillation-controlling element is a nonlinear crystal for harmonics generation.

In the second mentioned laser device, wherein the first laser oscillator has a first optical resonator formed of two reflectors in which the first laser medium is disposed and the second laser oscillator has a second optical resonator formed of two reflectors in which the second laser medium is disposed, the first laser oscillator has a light path, the second laser oscillator has a light path and the light paths run In parallel as being superposed on or intersecting each other, the second laser medium and one of the two reflectors forming the second optical resonator of the second laser oscillator are disposed in the first optical resonator of the first laser oscillator, and the first laser oscillator is used as an excitation light source to cause the second laser oscillator to effect laser oscillation.

The first mentioned laser device, wherein a laser oscillator is furnished with a first laser medium disposed in a laser resonator formed of two reflectors and a laser amplifier is furnished with a second laser medium and a reflector, the light path of said laser oscillator and the light path of said laser amplifier run in parallel as superposed or intersect each other, the second laser medium and the reflector of said laser amplifier are disposed in the optical resonator of said laser oscillator, the light to be amplified is configured along a light path to enter through the end face of the second laser medium opposite to the reflector, reciprocate through the second laser medium with the reflection by the reflector, and exit again from the entered end face thereof, and a optical amplifier is excited by using the laser light of the laser oscillator as an pumping light source.

In the second mentioned laser apparatus, the first laser oscillator has a first optical resonator formed of two reflectors in which the first laser medium is disposed and the second laser oscillator has a second optical resonator formed of two reflectors in which the second laser medium is disposed, the first laser oscillator has a light path, the second laser oscillator has a light path and part of the light path of the first laser oscillator and part of the light path of the second laser oscillator run in parallel as being superposed on or intersecting each other, the second laser medium is disposed in the first optical resonator, and the first laser oscillator is used as an excitation light source to cause the second laser oscillator to effect laser oscillation.

In the second mentioned laser device, the first laser oscillator has a first optical resonator formed of two reflectors in which the first laser medium is disposed and the second laser oscillator has a second optical resonator formed of two reflectors in which the second laser medium is disposed, the second laser medium is disposed in the first optical resonator, the first laser oscillator has a light path, part of the light path of the first laser oscillator is formed in the second laser medium and disposed on a path for allowing incidence of light on one end face of the second laser medium, reflecting and propagating the light on a lateral surface thereof and emitting the light through the other end face thereof, and laser light of the first laser oscillator is used as an excitation light source to cause the second laser oscillator to effect laser oscillation.

In the second mentioned laser device, the first laser oscillator has a first optical resonator formed of two reflectors in which the first laser medium is disposed and the second laser oscillator has a second optical resonator formed of two reflectors in which the second laser medium is disposed, the second laser medium is disposed in the first optical resonator, the second laser oscillator has a light path, part of the light path of the second laser oscillator is disposed on a path for allowing incidence of light on one end face of the second laser medium, reflecting and propagating the light on a lateral surface thereof, and emitting the light through the other end face thereof, and laser light of the first laser oscillator Is used as an excitation light source to cause the second laser oscillator to effect laser oscillation.

The first mentioned laser device , wherein a laser oscillator is furnished with a first laser medium disposed in a optical resonator formed of two reflectors and a laser amplifier is furnished with a second laser medium provided with a pair of terminal parts, the second laser medium and the pair of terminal parts is disposed in the optical resonator of the first laser oscillator, the light to be amplified enters in said amplifier through one of the terminal parts and exits out thereof through the other terminal part, and the optical amplifier is excited by using the laser light of the laser oscillator as an pumping light source.

Fig. 1 is a block diagram illustrating the first embodiment of the laser device contemplated by this invention.

Fig. 2 is a block diagram illustrating the second embodiment of the laser device contemplated by this invention.

Fig. 3 is a block diagram illustrating the third embodiment of the laser device contemplated by this invention.

Fig. 4 is a block diagram illustrating the fourth embodiment of the laser device contemplated by this invention.

Fig. 5 is a block diagram illustrating the fifth embodiment of the laser device contemplated by this invention.

Fig. 6 is a block diagram illustrating the sixth embodiment of the laser device contemplated by this invention.

Fig. 7 is a block diagram illustrating the seventh embodiment of the laser device contemplated by this invention.

Fig. 8 is a block diagram illustrating the eighth embodiment of the laser device contemplated by this invention.

Fig. 9 is a block diagram illustrating the ninth embodiment of the laser device contemplated by this invention.

Fig. 10 is a block diagram illustrating the tenth embodiment of the laser device contemplated by this invention.

Fig. 11 is a block diagram illustrating an embodiment having the structure of the laser device of Fig. 8 slightly modified.

Fig. 12 is a block diagram illustrating an embodiment having the structure of the laser device of Fig. 9 slightly modified.

Fig. 13 is a block diagram illustrating an embodiment having the structure of the laser device of Fig. 10 slightly modified.

Fig. 14 is a block diagram illustrating an embodiment having the structure of the laser device of Fig. 10 slightly modified.

Fig. 15 is a block diagram illustrating an embodiment having the structure of the laser device of Fig. 8 slightly modified.

Fig. 16A is a block diagram illustrating the eleventh embodiment of the laser device contemplated by this invention.

Fig. 16B is a bird's-eye view of the part of a laser oscillator of the eleventh embodiment.

Fig. 17 is a block diagram illustrating an embodiment resulting from slightly varying the configuration of the eleventh embodiment.

Fig. 18 is a block diagram illustrating an embodiment resulting from slightly varying the configuration of the eleventh embodiment.

Fig. 19 is a diagram illustrating the configuration of the resonator of the laser oscillator in the eleventh embodiment.

Now, the mode of embodying this invention will be explained in detail below with reference to the drawing annexed hereto. In the following explanation, the same elements or the elements having the same functions will be denoted by the same reference numerals.

This invention concerns a laser device which is so adapted that, when the radiation spectrum of a semiconductor laser diode (such as, for example, a GaAlAs LD having an oscillation wavelength of 792 nm) or a lamp serving as an pumping light source in a laser oscillator does not concur with the absorption spectrum of a lasing element dispersed in a solid-state laser medium, this rod will be efficiently pumped by an another solid-state laser oscillating at a wavelength capable of being absorbed by the solid-state laser element and the laser oscillation will be manipulated by inserting controlling devices in the resonator as well.

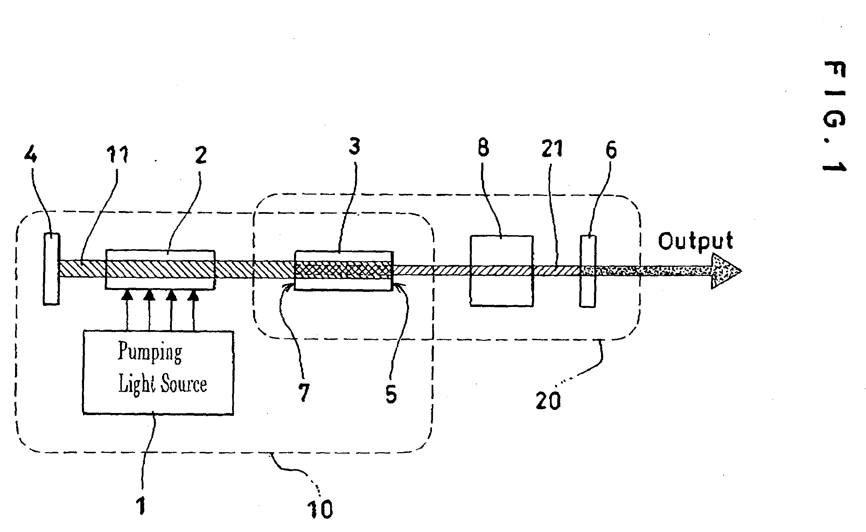

Fig. 1 illustrates an example of the laser device contemplated by this invention. As laser media, two laser rods 2 and 3 each of which are doped with a first laser element (such as, for example, Tm: YLF, Nd:YAG, or Yb:YAG) having a gain at a first wavelength (λ1) and a second laser element (such as, for example Ho: YLF or Ti:Al₂O₃) having a gain at a second wavelength (λ2) are used respectively. One of the two end faces of the laser rod 3 has attached thereto an optical coating 5 which effects total reflection with a first wavelength and substantially no reflection with a second wavelength and the another face has attached thereto an optical coating 7 having the inversed reflection property of the coating 5 mentioned above. A laser oscillator 10 is composed of the laser rod 2, the mirror 4, and the optical coating 5 and includes the laser rod 3 on the light path 11 in the resonator. A laser oscillator 20 is composed of the laser rod 3, the mirror 6, and the optical coating 7.

By pumping the laser rod 2 with a lamp or an LD, the laser rod 3 absorbs the oscillated laser beam and is pumped. The laser rod 3 is made to repeat amplification till the laser oscillator 10 starts to oscillate at the second wavelength. The pumping is effected more easily because the laser light inside the resonator has a higher intensity than the light emitted as an output. The laser rod 3 disposed inside the resonator 20 amplifies the light that starts to oscillate at the second wavelength and allows the output to be fetched from the output mirror 6.

Then, the laser output beam of the oscillator 20 can be amplified by passing it back and forth in another laser rod 3 which has been excited in the same way.

When an oscillation-controlling element 8 such as a polarizer or a Q-switch is disposed inside the oscillator 20, it affects no obstacle to the oscillation of the oscillator 10. Otherwise, the oscillation-controlling element 8 may be placed in the resonator of the oscillator 10. By inserting a nonlinear crystal, for example, into the oscillator 10, it is possible to pump the laser rod 3 by the higher harmonics of the first wavelength.

As a preferred example of the structure of this invention, the first working example of the laser device using two laser media is illustrated in Fig. 1. The laser device in Fig. 1 using two laser media is a laser oscillator which incorporates therein two laser oscillators. The laser oscillator 10 comprises the laser rod 2 optically excited by the pumping light source 1 such as an incandescent lamp or a discharge lamp or a laser diode (LD) and a resonator composed of the mirror 4 and the optical coating 5. The other laser oscillator 20 comprises the laser rod 3, the mirror 6, and the optical coating 7. The laser rod 3 is mounted on light paths 11 and 21 of both the laser oscillators. The optical coating 5 possesses a high reflection with respect to the oscillation wavelength (first wavelength) of the laser oscillator 10 and a high transmission with respect to the oscillation wavelength (second wavelength) of the laser oscillator 20. The optical coating 7 possesses a high transmission with respect to the oscillation first wavelength of the laser oscillator 10 and a high reflection with respect to the oscillation second wavelength of the laser oscillator 20. The optical coatings of this nature are each realized by multilayer dielectric coatings. Generally, in the laser oscillator, the light in the resonator has a far greater intensity than the light to be fed out, and the laser rod 3 is easily excited by the laser light inside the resonator 10 even if the laser rod 3 has weak absorption at first wavelength. In consequence of this excitation, the oscillator 20 consisting of the resonator formed by the mirror 6 and the optical coating 7 and the laser rod 3 disposed inside this resonator gives rise to laser oscillation and the laser output beam is obtained through the output mirror 6.

The oscillation of the laser oscillator 20 can be easily controlled by inserting the oscillation-controlling element 8 into the resonator composed of the mirror 6 and the optical coating 7 as illustrated in Fig. 1. When the Q-switch (such as, for example, a Pockels cell Q-switch or an acousto-optic Q-switch) is used as the oscillation-controlling element 8, the laser pulse can be easily obtained. When the mode-locking element is used instead, it gives rise to a mode-locked laser. When the nonlinear crystal which is capable of generating the second harmonics is used, for example, the laser output beam at shorter wavelength can be fed out.

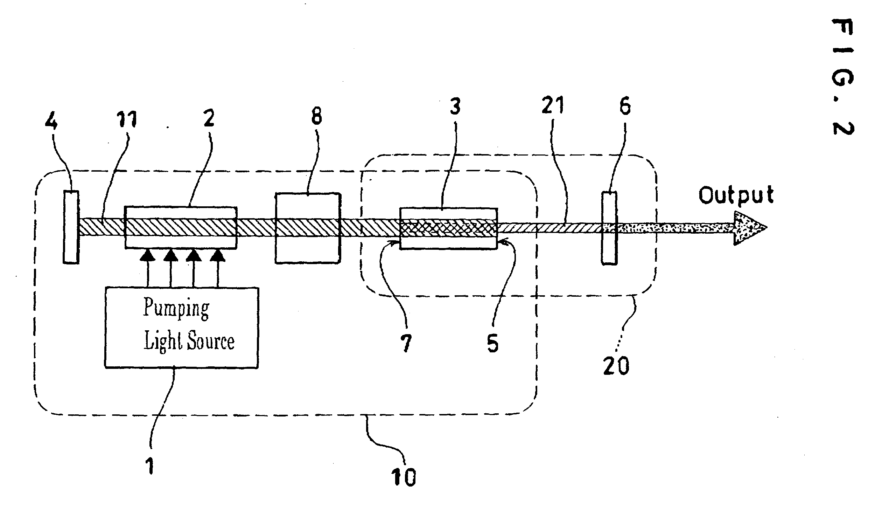

Fig. 2 illustrates the second working example of the laser device contemplated by this invention. The oscillation-controlling element 8, when inserted in the resonator composed of the mirror 4 and the optical coating 5 in the oscillator 10, permits control of the oscillation of the laser oscillator 10. When the Q-switch is used as the oscillation-controlling element 8, the laser rod 3 can be efficiently excited even when the life time of upper level of the laser medium 3 is shorter than the pumping duration of the pumping light source 1. When a nonlinear crystal (such as, for example, KDP, LBO, or BBO) which is capable of generating higher harmonics is used as the oscillation-controlling element 8, the laser oscillator which oscillates at shorter wavelength or the light amplifier which permits amplification of light at shorter wavelength can be obtained because the laser rod 3 can be excited by a light at a shorter wavelength than the first wavelength.

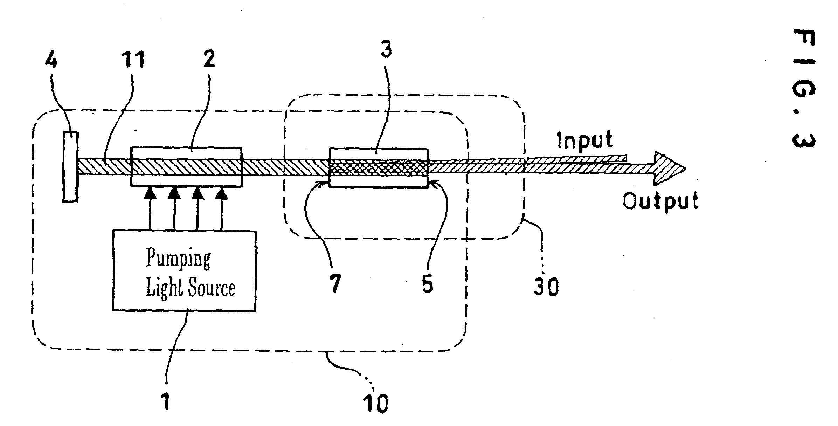

Next, as an example of the laser amplifier, the third working example of the laser device using two laser media will be explained with reference to Fig. 3. The laser device in Fig. 3 which uses two laser media is a laser amplifier which comprises one laser oscillator and one amplifier. The laser oscillator 10 comprises a laser rod 2 optically excited by the pumping light source 1 such as an incandescent lamp or a discharge lamp or a laser diode (LD) and a resonator formed of the mirror 4 and the optical coating 5. The laser amplifier 30 comprises the laser rod 3. The laser rod 3 is disposed on the light paths of both the laser oscillator 10 and the laser amplifier 30. The optical coating 5 possesses a high reflection with respect to the oscillation wavelength of the laser oscillator 10 and also a high transmission with respect to the wavelength of the input light to the laser amplifier 30. Then, the optical coating 7 possesses a high transmission with respect to the oscillation wavelength of the laser oscillator 10 and a high reflection with respect to the wavelength of the input light to the laser amplifier 30.

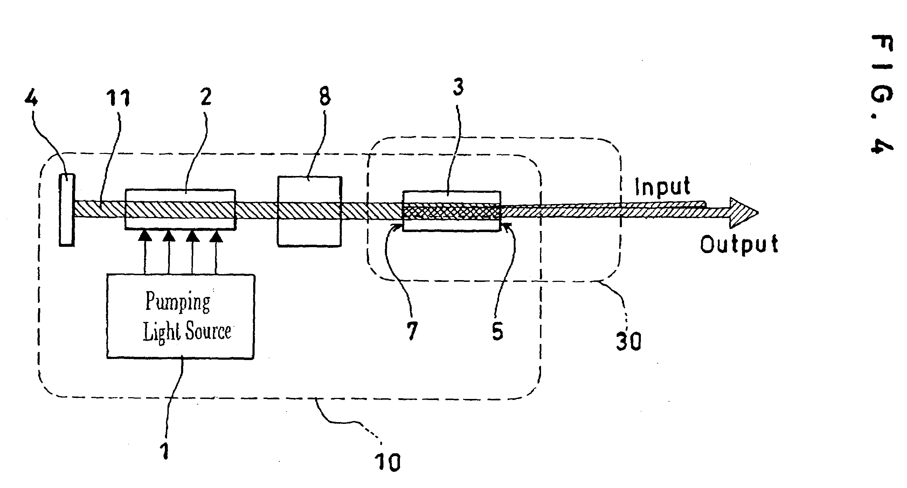

Fig. 4 illustrates the fourth working example of the laser device according to this invention. The oscillation-controlling element 8 inserted in the resonator composed of the mirror 4 and the optical coating 5 permits easy control of the operation of the laser amplifier 20. When the Q-switch is used as the oscillation-controlling element 8, the laser rod 3 can be efficiently excited even when the life time of the upper level of the laser medium 3 is shorter than the pumping duration of the pumping light source 1. When the nonlinear crystal capable of generating the second harmonic is used instead, the light can be amplified at shorter wavelength than the lasing wavelength of the oscillator 10.

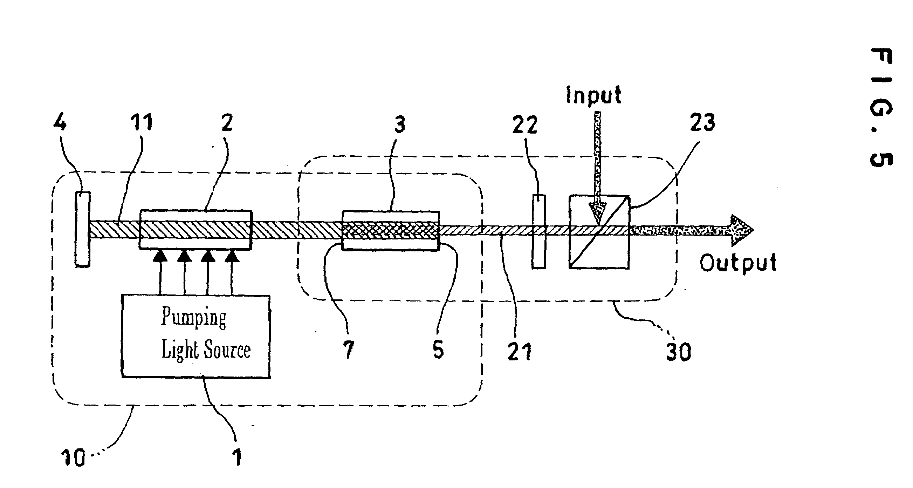

Fig. 5 illustrates as the fifth working example of this invention, a laser device which uses a polarizing beam splitter 23 for the incidence of a light to be amplified (second wavelength). The input light at the second wavelength which is amplified by the laser rod 3 is separated from the output light by the polarizing beam splitter 23 and a quarter wave plate 22. The input and the output light are fed and extracted through the respective optical surfaces of the polarizing bean splitter 23. The input light of linear polarization at the second wavelength which has been reflected on the polarizing beam splitter 23 changes its polarization to circular by the quarter-wave plate which has the axis of the retardation inclined by 45 degrees from the normal direction to the plane of the page, reflected by the optical coating 7, and amplified while reciprocating in the laser rod 2. After the passage of this light through the quarter wave plate 22 again the light is the same that passed through a half-wave plate, and the light returns its polarization to be linear in the direction perpendicular to that of the input light and passes through the beam splitter 23 to give rise to the output light.

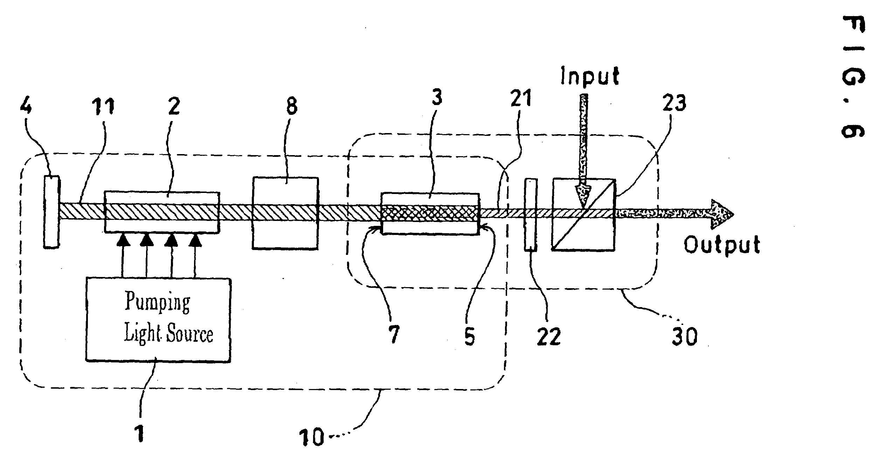

In the laser device illustrated in Fig. 6 as the sixth working example of this invention, the operation of the laser amplifier 20 can be easily controlled by the insertion of the oscillation-controlling element 8 into the resonator composed of the mirror 4 and the optical coating 5 When the Q-switch is used as the oscillation-controlling element 8, the laser rod 3 can be efficiently excited even when the upper life time of the laser medium 3 is shorter than the pumping duration of the pumping light source 1. When the nonlinear optical crystal capable of generating the second harmonics is used instead, the light at the shorter wavelength can be amplified by proper selection the laser rod 3 which can be pumped by the harmonics.

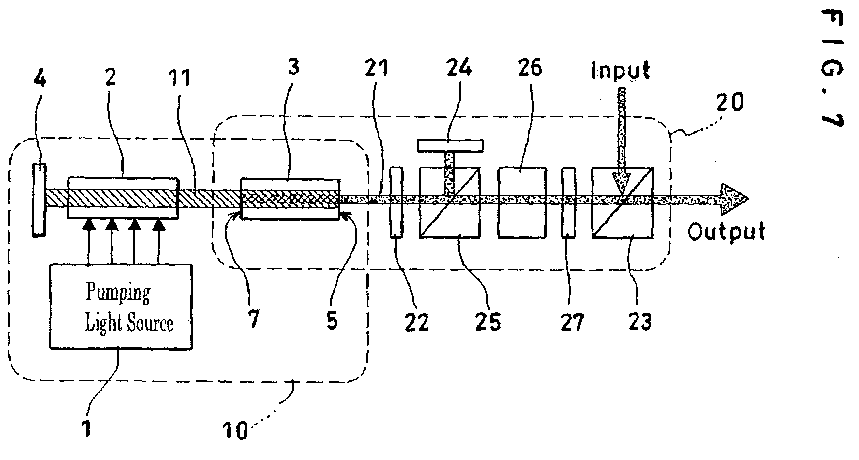

The laser device illustrated in Fig. 7 as the seventh working example results from adding the sixth working example described above and a mirror 24, a polarizer 25, a Faraday rotator 26, and a half wave plate 27 together in order that the light amplified by the laser rod 3 may reciprocate twice in the laser rod 3. The mirror 24 and the polarizer 25 are depicted by rotating 90 degrees around the optical axis for the illustration. By the light to reciprocate twice in the laser rod, it is possible to facilitate saturated amplification and convert the energy stored in the laser rod 3 to the light energy at the second wavelength with high efficiency. The linearly polarized inlet light at the second wavelength reflected by the polarizer 23 has the direction of polarization thereof rotated by +45 degrees by the half wave plate having the axis of wave retardation inclined by 22.5 degrees from the direction normal to the page and next rotated inversely by 45 degrees by the Faraday rotator 26 and returns to the original polarization. This light is passed through the polarizer 25 without being reflected, allowed to reciprocate in the laser rod 3, reflected by the polarizer 25, and further turned around by the mirror 24. The light which has reciprocated in the laser rod 3 is passed through the polarizer 25, rotated by -45 degrees by the Faraday rotator, next rotated by -45 degrees by the half wave plate and consequently converted into a linearly polarized tight in the direction perpendicular to that of the initial inlet light, and then passed through the polarizer 23 to be fed out as the output light.

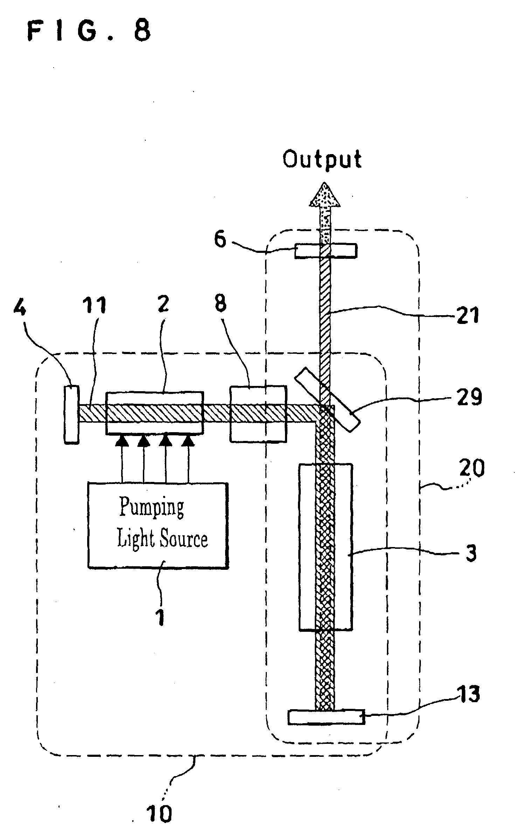

Now, as an example of a laser oscillator, the eighth working example of the laser device using two laser media will be described with reference to Fig. 8. The laser device in Fig. 8 using two laser media comprises two laser oscillators. The laser oscillator 10 comprises a resonator which is composed of the laser rod 2 optically excited by such an pumping light source 1 as an incandescent lamp or a discharge lamp or a laser diode (LD), the mirror 4, and the mirror 13 and the laser oscillator 20 comprises a resonator composed of the mirror 6 and the mirror 13 and the laser rod 3 disposed inside the resonator. The laser rod 3 is disposed on the light paths of both the laser oscillators. While the laser device in the first working example has separated the resonators 1 and 2 by the optical coatings disposed at the opposite end faces of the laser rod 2, the present structure effects this separation by the use of a dichroic beam splitter 29. The dichroic beam splitter 29 reflects the first wavelength and transmits the second wavelength. It is plain that the oscillation can be controlled similarly to the first working example by inserting the oscillation-controlling element 8 into the resonator of the laser oscillator 10 or the resonator of the laser oscillator 20.

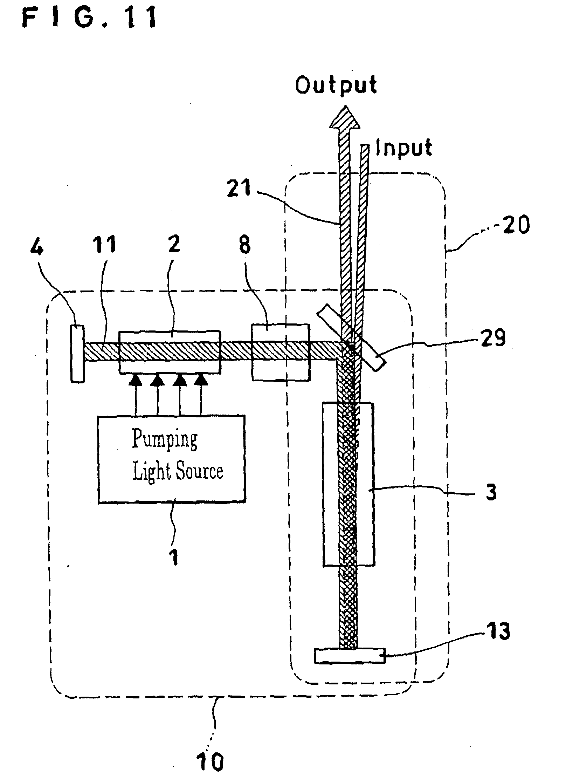

Fig. 11 depicts a modification of the laser device in Fig. 8, which results from removing the mirror 6 in the laser oscillator 20 and utilizing the laser rod 3 as a laser amplifier instead.

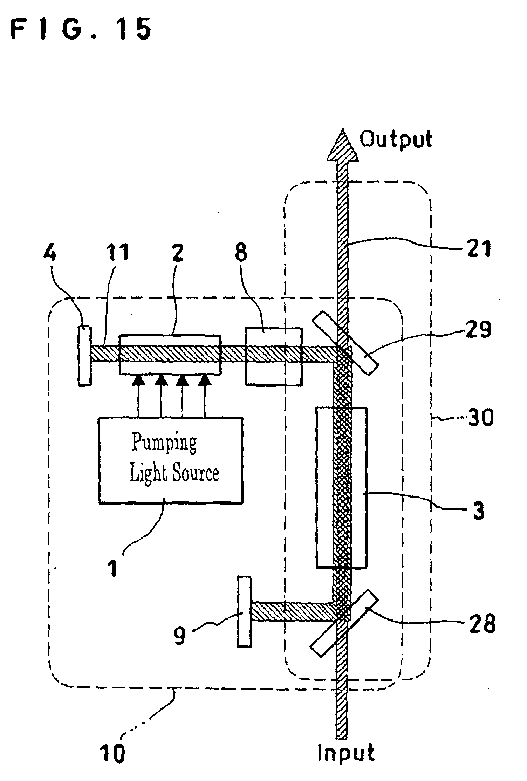

Fig. 15 depicts another modification of the laser device in Fig. 8, in which the mirror 13 in Fig. 8 is replaced with a mirror 9 and a dichroic beam splitter 28 reflecting the light at the first wavelength and transmitting the light at the second wavelength in order that the laser rod 3 may be utilized as a single-pass laser amplifier.

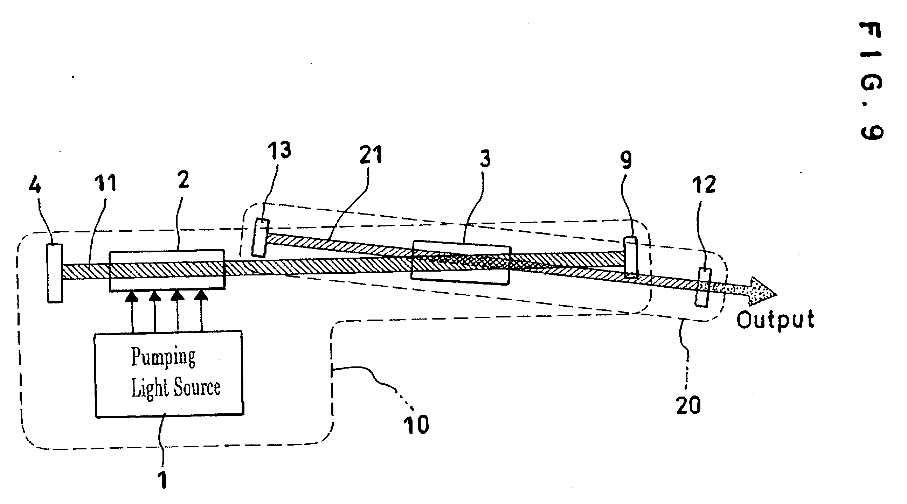

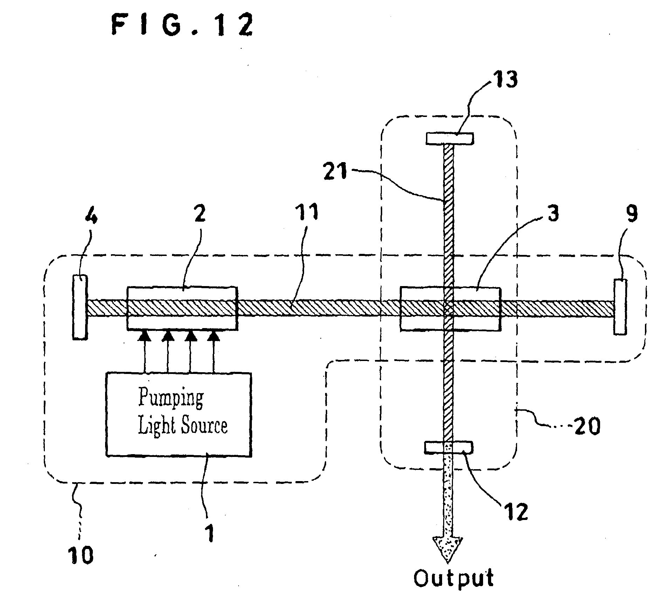

Next, the ninth working example of the laser oscillator will be described below with reference to Fig. 9. The laser device in Fig. 9 using two laser media is a laser oscillator which comprises two laser oscillator. The laser oscillator 10 comprises a laser rod 2 and a resonator which is composed of the mirror 4, and the mirror 9. The laser rod 2 is optically pumped by an excitation light source 1 such as an incandescent lamp or a discharge lamp or a laser diode. The laser oscillator 20 comprises a resonator composed of a mirror 12 and the mirror 13 and the laser rod 3 disposed inside this resonator. The laser rod 3 is disposed on the intersection of light paths of the laser oscillators. The laser rod 3 is easily pumped by the laser light inside the laser oscillator 10. Owing to this excitation the laser oscillator 20 comprised of the laser rod 3 disposed in the resonator composed of the mirror 13 and the mirror 12 starts laser oscillation, and the laser output beam emanates from the output mirror 12. The laser can also oscillate by a setup which allows the light paths of the laser oscillator 10 and the laser oscillator 20 to intersect each other as illustrated in Fig. 12.

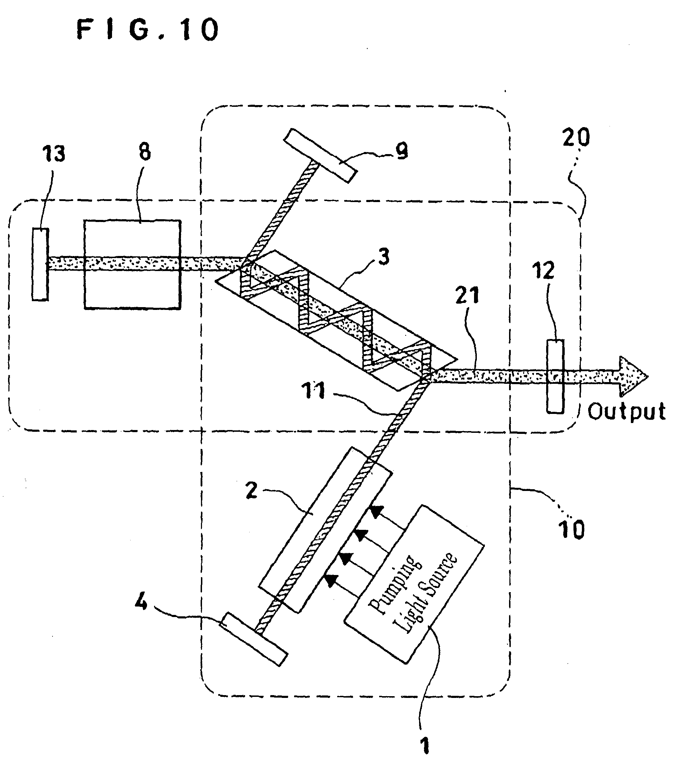

Then, the tenth working example is illustrated in Fig. 10 as typifying the laser oscillator. The laser device in Fig. 10 using two laser media consists of two laser oscillators. The laser oscillator 10 comprises a resonator, composed of the mirror 4 and the mirror 9, and a laser rod 2 optically pumped by an pumping light source 1 such as an incandescent lamp or a discharge lamp or a laser diode. The laser oscillator 20 comprises a resonator, composed of the mirror 13 and the mirror 12, and the laser rod 3 disposed in this resonator. The laser rod 3 is disposed on both light paths of the laser oscillators. The laser rod 3 has a rectangular cross section and the light enters through the end faces of this rod at a Brewster angle. The light at the first wavelength enters through the end face and proceeds to the other end face being reflected back and forth between the sidewalls inside the laser rod 3. The angles of incidence of the light on the opposite end faces are also Brewster angles. Here, by symmetrising the angle of incidence of the light at the second wavelength with that of the first wavelength relative to the normal of the plane of incidence, it is made possible to separate these lights at the wavelengths 1 and 2 when they depart from the rod. The reflections on the sidewalls are preferred to be internal total reflections. If the condition of the total reflections is not fulfilled, however, the light path mentioned above may be realized by providing a high-reflection coatings on the sidewalls and effecting the reflection by the use thereof.

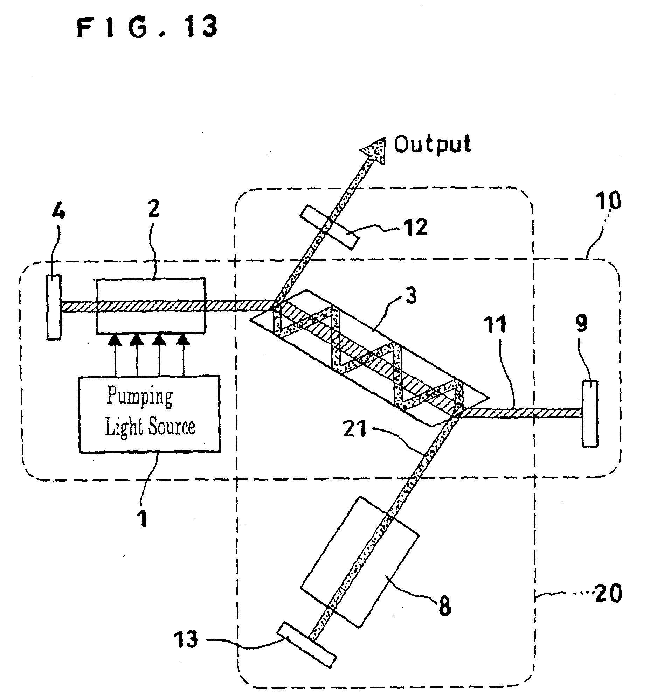

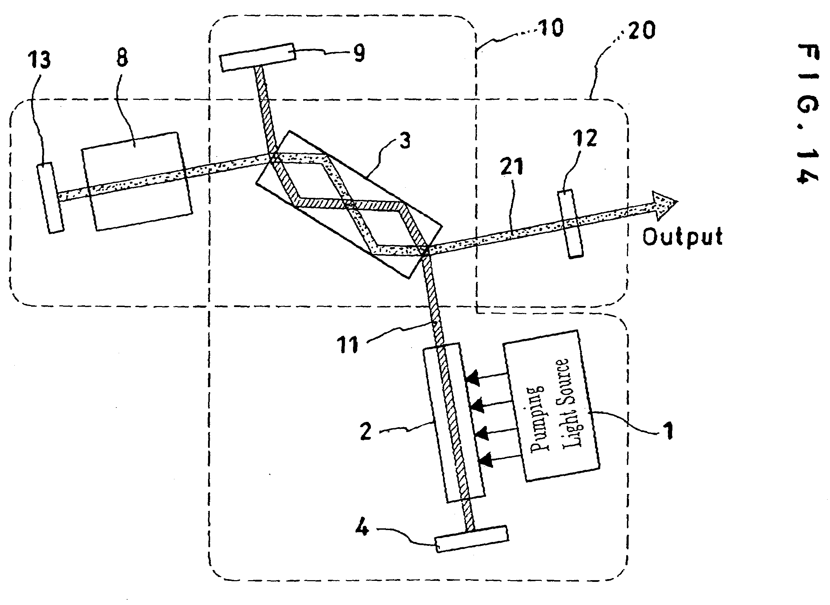

In contrast to what is illustrated in Fig. 10, it is plain that the light at the first wavelength is allowed to propagate straight in the laser rod 3 and the light at the second wavelength to repeat reflection on the sidewalls thereof as illustrated in Fig. 13. Further, it is plain that the structure which, as illustrated in Fig. 14, allows the light of both the wavelengths to be reflected on the lateral surfaces conforms with this invention. In this case, the reflections on the lateral surfaces are preferred to be total reflections. The total reflections can be equivalently realized by dielectric multilayer reflection coatings or metallic reflection coatings.

Further, even the present working example can be modified by omitting the resonator 2 and the oscillation-controlling element and utilizing the laser rod 2 for laser amplification similarly to the modification mentioned above.

The laser devices described above indeed require the first wavelength to be shorter than the second wavelength and nevertheless share the advantage that the second wavelength can be adjusted and controlled independently of the exciting laser at the first wavelength.

The above mentioned working examples have represented the cases of using two solid-state laser media. This invention, despite this fact, does not need to be limited to the solid-state laser media. The same effect as described above can be realized by gas laser media, dye laser media, and combinations of solid-state laser media with such lasers.

Owing to the adoption of such a structure as described above, the laser device contemplated by this invention is enabled to acquire a high conversion efficiency and serve as a laser unit capable of pulse oscillation as well by selecting a combination of laser media even when the radiation spectrum of the pumping light source in the laser oscillator does not concur or does not easily concur with the absorption spectrum of the laser element dispersed in the solid-state laser medium.

Further, since the first laser oscillator and the second laser oscillator can be independently designed, their optimum operating conditions can be easily realized respectively.

Further, since such an oscillation-controlling element as a polarizer, a Q-switch, a mode locking element, or a nonlinear crystal for wavelength conversion is inserted in the first laser oscillator and the second laser oscillator, these laser oscillators are enabled to effect the oscillation of Q-switched pulse, the generation of a higher harmonics wave in the resonator, or the mode locking. Particularly by the insertion of the nonlinear crystal of the first wavelength in the first laser oscillator, it is made possible to excite the laser rod with the higher harmonics wave of the first wavelength and acquire the laser light of the shorter possible wavelength.

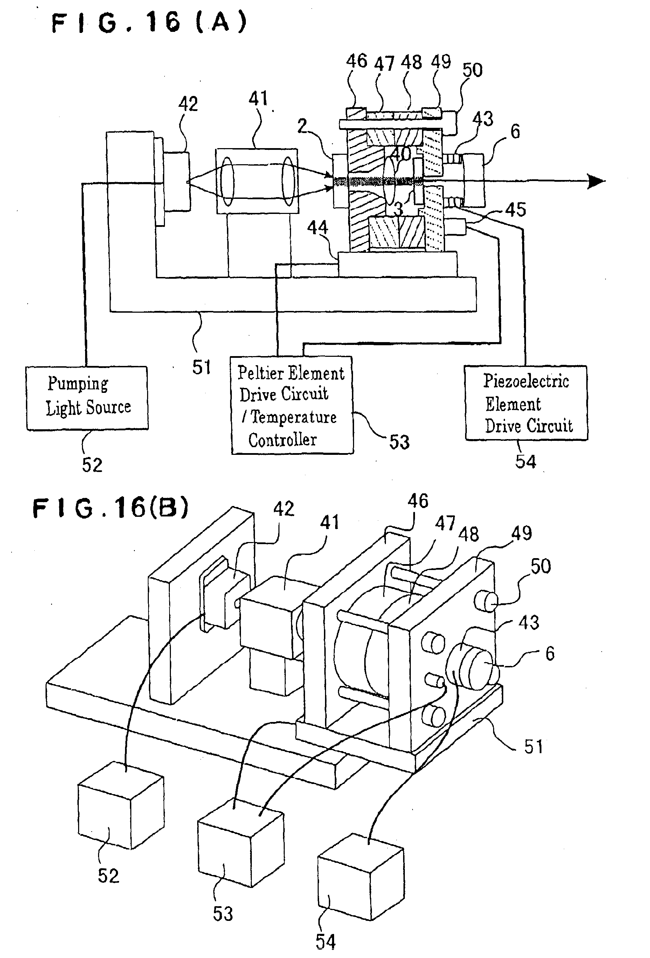

Then, as an example of the laser oscillator using microchip laser slabs made of solid-state laser crystals or glasses as laser media, the eleventh working example is illustrated in Fig. 16A. The pumping light at a wavelength λ3 emitted from a laser diode (LD) 42 is focused through a collimator lens 41 on a microchip laser medium 2 made of a solid-state laser crystal or glass. This laser medium 2 is capable of absorbing the pumping light and consequently amplifying the light at a wavelength λ1. A microchip laser medium 3 made of another solid-state laser crystal or glass is opposed to the laser medium 2 and this medium is capable of absorbing the light at the wavelength λ1 and consequently amplifying the light at a wavelength λ2. Further, a laser output mirror 6 at the wavelength λ2 is opposed to the laser medium 3.

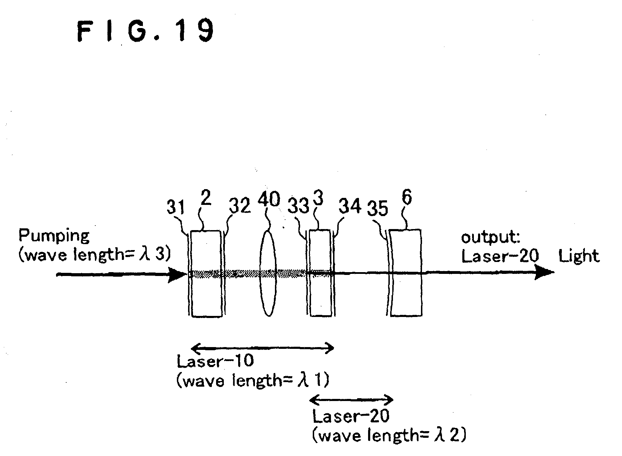

As illustrated in Fig. 19, a dielectric optical coating 31 giving no reflection to the light at the wavelength λ3 and high reflection to the light at the wavelength λ1 is attached to the left-side face of the laser medium 2 and a dielectric optical coating 32 producing high reflection to the light at the wavelength λ3 and no reflection to the light at the wavelength λ1 is attached to the right-side face. Then, a dielectric optical coating 33 giving no reflection to the light at the wavelength λ1 and high reflection to the light at the wavelength λ2 is attached to the left-side face of the laser medium 3 and a dielectric optical coating 34 giving high reflection to the light of the wavelength λ1 and no reflection to the light of the wavelength λ2 is attached to the right-side face. The preferred reflectivity of these dielectric optical coatings relative to the wavelengths λ1, λ2, and λ3 are summarized in Table 1.

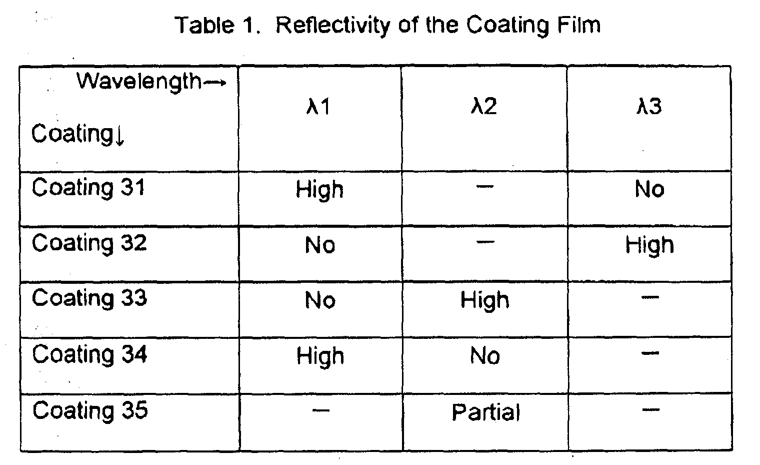

A laser oscillator 1 at the wavelength λ1 is formed of the laser medium 2, the laser medium 3, and a lens 40 and operated to oscillate a laser light. This light excites the laser medium 3 without being taken out of the device. A laser oscillator 2 at the wavelength λ2 is composed of the laser medium 3 and an output mirror 6. Part of the lasing light is taken out of the device through the output mirror 3 and made to constitute an output light. The laser medium 2 which contains Nd(neodymium), Yb(ytterbium), Tm(thulium), or Er(erbium) as active elements results from melting one of these active elements in one of the laser host materials of YAG, YVO4, YLF, LuAg, LuLF and laser glasses. The laser medium 3 contains Ho(holmium) as an active element and results from melting this active element in one of the laser host crystals of YAG, YVO4, YLF, LuAG, and LuLF.

The laser diode 42 and the collimator lens 41 are fixed on a base plate 51 and the laser medium 2, the laser medium 3, and the output mirror 6 are fixed on the base plate through the medium of a mount and a Peltier cooling element. The heat produced by the laser diode, the laser medium 2, and the laser medium 3 is transferred to the base plate and extracted to the exterior of the device.

The laser medium 2 is fixed to the left-side face of a rectangular mount plate 46 having a hole opened at the center and the lens 40 of a laser resonator 1 is fixed to the right-side face. The laser medium 3 is fixed to the left-side face of a rectangular mount plate 49 having a hole opened at the center and the output mirror of a laser resonator 2 is fixed to the right-side face through the medium of a piezoelectric element 43 intended for tuning the lasing frequency. The mount 46 and the mount 49 are opposed across a ring 47 and a ring 48 and fixed to each other with four screws 50 piercing the four corners of the mount 49. The ring 47 and the ring 48 are shaped in wedge and can be rotated mutually and jointly relative to the mount 46 to align the optical axis of the resonator 1. Consequently, the heat conduction as well as the mechanical stability of the mount can be exalted. A bird's-eye view of the portion of this laser resonator is illustrated in Fig. 16B.

The mount 49 has a thermometer 45 attached thereto. Based on the temperature detected by the thermometer 45, a drive circuit 53 is enabled to control the temperature of the mount by means of a Peltier element 44. The piezoelectric element 43 fixed between the output mirror 6 and the mount 49 is driven by a piezoelectric element drive circuit 54 and consequently enabled to tune and modulate the frequency of the laser oscillator 2. The laser diode 42 is driven by a laser diode drive circuit 52.

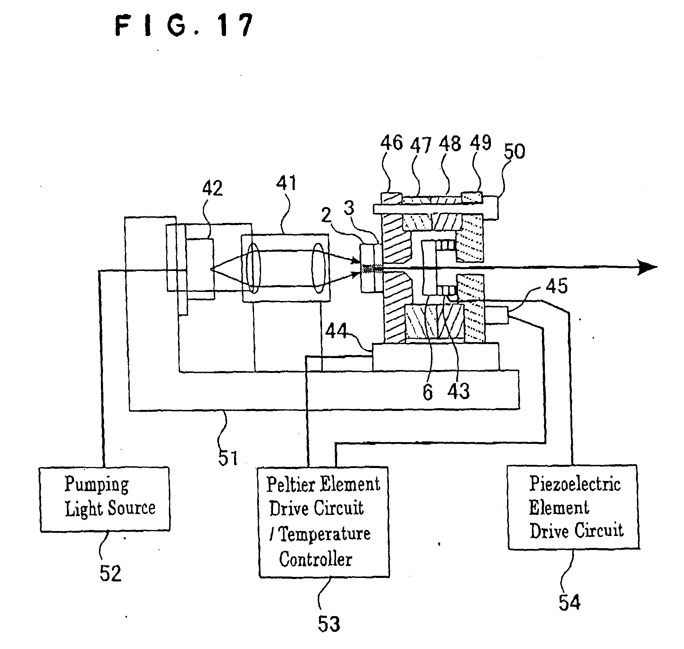

The configuration shown in Fig. 16A may be changed to the configuration shown in Fig. 17. This laser has the laser medium 2 and the laser medium 3 fixed in a mutually superposed state to the mount 46 in Fig. 16A. This change obviates the necessity for a lens 40 by composing the laser oscillator 1 inside the superposed laser media and reducing the length of the resonator.

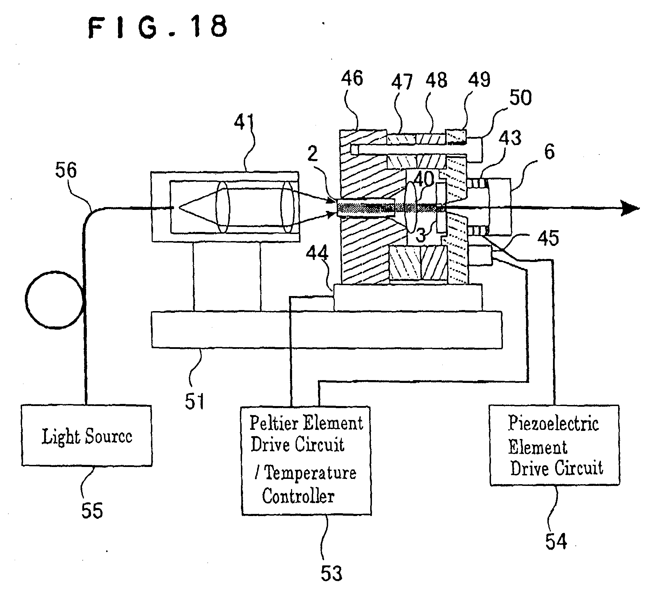

The configuration shown in Fig. 16A may be changed to the configuration shown in Fig. 18. This laser substitutes a laser rod 2 for the laser medium 2 of Fig. 16A. The rod is fixed in the hole of the mount 46 and is pumped by the light from an LD light source device 55 having a optical fiber bundle 56 attached thereto.

## Claims

1. A laser device using two laser media, **characterized by** comprising:
an pumping light source;
a first laser oscillator furnished with a first solid-state laser medium excited by an pumping light source;
a second solid-state laser medium disposed in said first laser oscillator and pumped by the lasing light of said first laser oscillator; and
an output means for emitting an amplified light by said second laser medium.

2. A laser device according to claim 1, further comprising a second laser oscillator in which the second solid-state laser medium is disposed in a second laser oscillator and furnished with a configuration for fetching the output light from said second laser oscillator.

3. A laser device according to claim 2, wherein the first laser oscillator and the second laser oscillator are furnished with one reflecting mirror adapted for common use thereby.

4. A laser device according to claim 3, wherein the reflecting mirror of said second laser oscillator is enabled to emit the output by transmitting part of the light amplified by said first solid-state laser medium.

5. A laser device according to claim 2, wherein the second laser oscillator has a light path and further comprising an oscillation-controlling element is disposed on the light path.

6. A laser device according to claim 5, wherein the oscillation-controlling element is a Q-switch.

7. A laser device according to claim 5, wherein said oscillation-controlling element is a mode-locking element.

8. A laser device according to claim 5, wherein said oscillation-controlling element is a nonlinear crystal.

9. A laser device according to claim 1, wherein the first laser oscillator is in the state of an oscillator and the second lasing medium is in the state of an amplifier.

10. A laser device according to claim 1, wherein the first laser oscillator has a light path and further comprising an oscillation-controlling element disposed on the light path.

11. A laser device according to claim 2, wherein the first laser oscillator has a light path and further comprising an oscillation-controlling element disposed on the light path.

12. A laser device according to claim 10, wherein the oscillation-controlling element is a Q-switch and said second solid-state laser medium effects amplification of a pulse light.

13. A laser device according to claim 11, wherein the oscillation-controlling element is a Q-switch and the second solid-state laser medium effects amplification of a pulse light.

14. A laser device according to claim 10, wherein the oscillation-controlling element is a nonlinear crystal.

15. A laser device according to claim 11, wherein said oscillation-controlling element is a nonlinear crystal.

16. A laser device according to claim 2, wherein a first laser oscillator is furnished with a first laser medium disposed in a first laser resonator formed of two reflectors and a second laser oscillator is furnished with a second laser medium disposed in a second laser resonator formed of two reflectors, the first laser oscillator has a light path, the second laser oscillator has a light path and the light paths run in parallel as superposed or intersect each other, the second laser medium and one of the two reflectors forming the second laser resonator are disposed in the first laser resonator of said first laser oscillator, and the second laser oscillator effects laser oscillation by using the first laser oscillator as an pumping light source.

17. A laser device according to claim 1, wherein a laser oscillator is furnished with a first laser medium disposed in a laser resonator formed of two reflectors and a laser amplifier is furnished with a second laser medium and a reflector, the light path of said laser oscillator and the light path of said laser amplifier run in parallel as superposed or intersect each other, the second laser medium and the reflector of said laser amplifier are disposed in the optical resonator of said laser oscillator, the light to be amplified is configured along a light path to enter through the end face of the second laser medium opposite to the reflector, reciprocate through the second laser medium with the reflection by the reflector, and exit again from the entered end face thereof, and a optical amplifier is excited by using the laser light of the laser oscillator as an pumping light source.

18. A laser apparatus according to claim 2, wherein the first laser oscillator has a first optical resonator formed of two reflectors in which the first laser medium is disposed and the second laser oscillator has a second optical resonator formed of two reflectors in which the second laser medium is disposed, the first laser oscillator has a light path, the second laser oscillator has a light path and part of the light path of the first laser oscillator and part of the light path of the second laser oscillator run in parallel as being superposed or intersect each other, the second laser medium is disposed in the first optical resonator, and the second laser oscillator effects laser oscillation by using the first laser oscillator as an pumping light source.

19. A laser device according to claim 2, wherein the first laser oscillator has a first optical resonator formed of two reflectors in which the first laser medium is disposed and the second laser oscillator has a second optical resonator formed of two reflectors in which the second laser medium is disposed, the second laser medium is disposed in the first optical resonator, the first laser oscillator has a light path, part of the light path of said first laser oscillator is formed in the second laser medium for allowing incidence on one of the end face thereof, reflecting and propagating on the side surfaces thereof, and exiting through the other end face thereof, and the second laser oscillator effects laser oscillation by using the lasing light of the first laser oscillator as an pumping light source.

20. A laser device according to claim 2, wherein a first laser oscillator is furnished with a first laser medium disposed in a first optical resonator formed of two reflectors and a second laser oscillator is furnished with a second laser medium disposed in a second optical resonator formed of two reflectors, the second laser medium is disposed in the first optical resonator, the second laser oscillator has a light path, part of the light path of said second laser oscillator is disposed on such a path as allowing incidence on the end face of the second laser medium, reflecting and propagating on the side surfaces thereof, and exiting through the other end face thereof, and the second laser oscillator effects laser oscillation by using the laser light of the first laser oscillator as an pumping light source.

21. A laser device according to claim 1, wherein a laser oscillator is furnished with a first laser medium disposed in a optical resonator formed of two reflectors and a laser amplifier is furnished with a second laser medium provided with a pair of terminal parts, the second laser medium and the pair of terminal parts is disposed in the optical resonator of the first laser oscillator, the light to be amplified enters in said amplifier through one of the terminal parts and exits out thereof through the other terminal part, and the optical amplifier is excited by using the laser light of the laser oscillator as an pumping light source.
